# DEMANDE DE BREVET EUROPEEN

(11) **EP 1 250 840 A2**
(43) Date de publication de la demande: **23.10.2002**
(21) Numéro de dépôt: 02009216.9
(22) Date de dépôt: 23.04.2002
(51) Int. Cl.: A01K 63/00

(54) **Installation pour la reconstitution d'un milieu naturel**

(30) Priorité: 20.04.2001 FR 0105335
(71) Demandeur: KRIEF, Eric, 95400 Villiers Le Bel (FR); GARGASSON, Claudine, 95400 Villiers Le Bel (FR)
(72) Inventeur: KRIEF, Eric, 95400 Villiers Le Bel (FR); GARGASSON, Claudine, 95400 Villiers Le Bel (FR)
(74) Mandataire: Hautier, Jean-Louis

(57) **Abrégé**

La présente invention concerne une installation pour la reconstitution d'un milieu naturel comportant une base (9) sous forme d'un bac empli d'eau pour la reconstitution d'un milieu aquatique.

Elle comporte un réhausseur (10), superposé à la base (9) et délimitant un volume intérieur de reconstitution d'un milieu aérien.

Application à la fabrication d'installations à vocation décorative.

## Description

La présente invention concerne une installation pour la reconstitution d'un milieu naturel comportant une base sous forme d'un bac empli d'eau pour la reconstitution d'un milieu aquatique.

Elle donnera satisfaction aux aquariophiles, puisqu'elle permet de reconstituer un milieu aquatique, et permet en même temps de bénéficier d'un milieu aérien, incluant notamment d'un milieu terrestre.

D'une façon générale, selon l'état de la technique, on connaît des aquariums constitués d'un bac à parois vitrées, recevant de l'eau pour la constitution d'un milieu aquatique, notamment composé de plantes aquatiques, d'enrochements, et de poissons.

De par leur nature, les aquariums sont limités en ce qui concerne les applications possibles : il s'agit toujours de milieux strictement aquatiques. Qui plus est compte tenu de l'importante quantité d'eau reçue par les bacs d'aquarium, il est difficile de former un ensemble de grande hauteur, sans avoir recours à des aquariums de coût élevé et de poids important, de par l'épaisseur des parois vitrées qu'il faut alors prévoir.

Les aquariums sont ainsi souvent des parallélépipèdes rectangles très allongés suivant la direction horizontale, ce qui ne permet pas d'envisager de nombreuses variations de forme et d'apparence.

*On connaît de US-A-4.754.571 un appareil confirmant les fonctions d'aquarium et de terrarium. Selon ce document, une partie terrarium est formée, en juxtaposition, à l'arrière du milieu aquatique. Les dimensions nécessitées par cette configuration sont importantes si on souhaite créer un milieu aquatique d'un volume suffisant. Aucune combinaison d'effets décoratifs n'est produite car les milieux aquatique et terrestre sont seulement juxtaposés.*

La présente invention permet de remédier aux limitations actuelles des aquariums.

Elle permet en particulier la formation d'un ensemble combinant une partie aquatique et une partie aérienne pouvant notamment recevoir un milieu terrestre.

On forme ainsi des flores et des faunes différentes, en composant à la fois un milieu aquatique avec des poissons et une flore aquatique, et un milieu aérien avec notamment des plantes aériennes. En particulier une zone paludéenne peut être réalisée à ce niveau.

D'autres buts et avantages apparaîtront au cours de la description qui suit, qui présente de façon détaillée des modes de réalisation particuliers de l'invention qui sont donnés à titre d'exemple indicatif et non limitatif.

La présente invention concerne une installation pour la reconstitution d'un milieu naturel comportant une base sous forme d'un bac rempli d'eau pour la reconstitution d'un milieu aquatique.

Elle comporte un réhausseur, superposé à la base et délimitant un volume intérieur de reconstitution d'un milieu aérien.

Les variantes suivantes sont possibles pour l'invention :
- le réhausseur comporte une plate-forme de support des éléments d'un milieu terrestre dans le milieu aérien,
- la plate-forme repose sur la bordure supérieure d'au moins une paroi verticale de la base
- la plate-forme comporte une cellule en matériau transparent de réception de moyens d'éclairages,
- elle comprend des enrochements placés dans la base et de hauteur supérieure au niveau de l'eau pour constituer le
   support d'un milieu terrestre dans la partie émergée des enrochements,
- elle comporte des moyens de pompage de l'eau de la base et un circuit d'amenée de l'eau pompée à des moyens d'arrosage du milieu terrestre,
- les moyens d'arrosage sont constitués par un tube perforé de distribution de l'eau placé au-dessus du milieu terrestre dans le milieu aérien,
- elle comporte une galerie fermant la partie supérieure du réhausseur,
- la galerie comporte des moyens de ventilation du milieu aérien.
- Elle présente un circuit de soufflerie en relation avec les moyens de ventilation pour l'application d'un flux d'air sur la paroi interne du réhausseur.

Les dessins ci-joints sont donnés à titre d'exemples indicatifs et non limitatifs.

La figure 1 est une vue en coupe transversale de l'installation selon l'invention selon un premier mode de réalisation.

La figure 2 illustre un deuxième mode de réalisation de l'invention avec une composition différente pour le milieu aérien.

On appelle milieu aquatique la partie de l'installation emplie d'eau au sein de laquelle on peut constituer une flore et une faune aquatique.

Ce terme n'exclut pas l'intégration d'éléments artificiels.

Par opposition, en entend par milieu aérien la réalisation d'un milieu dans la zone non remplie d'eau de l'installation.

Ce milieu aérien peut notamment inclure un milieu terrestre, particulièrement sur la base d'enrochements et d'un substitut servant au support du milieu terrestre.

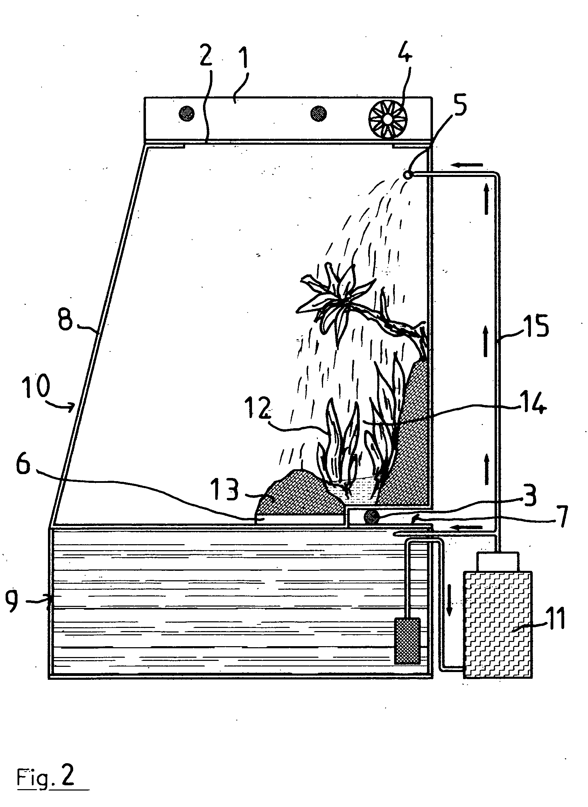

En référence aux figures, on constate que l'installation selon l'invention est réalisée sensiblement par un volume clos, fermé par des parois préférentiellement vitrées. On pourra notamment former un ensemble parallélépipédique rectangle ou encore, avec une façade (8) inclinée telle qu'apparaissant en figure 2.

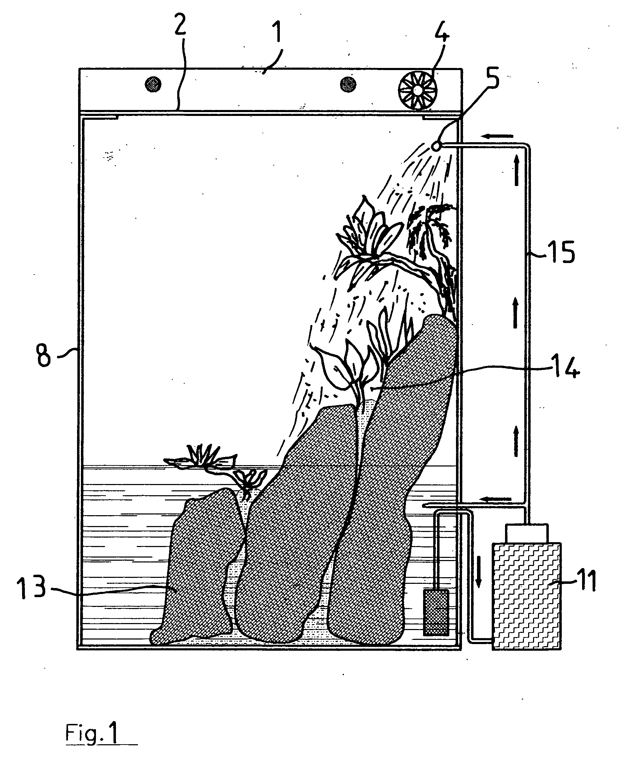

La partie basse de l'installation est constituée d'un bac empli d'eau, réalisant une base repérée (9) en figure 2. On pourra utiliser un bac connu dans le domaine de l'aquariophilie, et réaliser le reste de l'installation par addition d'éléments en superposition, ou encore former le bac dans la continuité du reste de l'installation comme en figure 1.

Selon l'invention, la base (9) est surmontée d'un réhausseur (10) servant à recevoir le milieu aérien.

Dans le cas de la figure 1, le réhausseur (10) est le prolongement des parois vitrées servant à constituer la base (9) recevant le milieu aquatique.

Dans le cas de la figure 2, le réhausseur (10) est un élément indépendant rapporté sur la base (9) et s'appuyant sur les renforts de rigidification des parois vitrées.

Avantageusement, une cellule (7) à parois vitrées permet l'appui du réhausseur (10) sur les renforts existant de la base (9). Cette cellule (7) qui constitue une plate-forme pour la réception du milieu terrestre, est éventuellement complétée par un support vitré (6).

La plate-forme ainsi formée a donc le double avantage de permettre le positionnement et le support mécanique du réhausseur (10) sur la base (9), et de réaliser lui-même le support d'un milieu terrestre (14).

Tel que représenté en figure 2, le milieu terrestre (14) peut notamment présenter des enrochements (13) et une végétation (12).

Dans le mode de réalisation de la figure 1, les enrochements (13) sont directement posés dans la partie de base de l'installation et leur hauteur est suffisante pour émerger

En référence à la figure 2, et tel qu'indiqué précédemment, la plate-forme peut comporter une cellule (7) à parois vitrées.

Selon ce mode de réalisation, la cellule (7) définit un volume intérieur apte à recevoir des moyens d'éclairage, par exemple constitués par un tube à néon (3). Avantageusement, le tube à néon (3) parcourt toute la longueur de la cellule (7). Ainsi, on réalise un éclairage particulièrement esthétique de l'installation, puisque totalement invisible pour un observateur placé en avant de la façade vitrée (8).

Tel qu'indiqué précédemment, le milieu terrestre peut être constitué par un milieu paludéen. Pour réaliser l'entretien d'une forte humidité, l'invention présente selon un mode préféré de réalisation, des moyens de pompage de l'eau présente de la base (9) et un circuit d'amenée de cette eau repéré (15) aux figures, et permettant d'arroser le milieu terrestre (14) en débouchant au-dessus de celui-ci.

Les figures schématisent cette aspersion d'eau au-dessus du milieu terrestre (14).

De façon préférée, les moyens d'arrosage du milieu terrestre (14), sont constitués par un tube perforé (5) répartissant l'aspersion selon une direction horizontale orientée suivant la largeur de l'installation.

En fin de cycle, l'eau ainsi dispersée retourne dans la base (9) et suit le circuit de filtrage et de pompage indiqué.

Qui plus est, la pompe (11) présente pour cet arrosage permet également de réaliser les moyens de filtrage du milieu aquatique de façon connue en soi.

Comme indiqué précédemment, il est avantageux de constituer des parois vitrées pour l'installation, afin de favoriser l'observation.

Cela étant, la partie supérieure de l'installation peut être surmontée d'une galerie (1) recevant notamment des moyens d'éclairage et un ventilateur (4).

Le milieu aquatique et le milieu aérien pourront être thermostatés, et le ventilateur (4) assurera le renouvellement de l'air et évitera l'échauffement excessif du volume d'air intérieur.

Un circuit de soufflerie peut par ailleurs être formé, par exemple par un canal tubulaire de circulation d'air comportant une pluralité d'ouvertures (telles de fentes) orientées vers la paroi interne du réhausseur (10). Selon cette configuration, le circuit de soufflerie est raccordé, à ses deux extrémités au volume intérieur de la galerie (1) qui reçoit le ventilateur (4).

Ce dernier assure le passage de l'air dans le circuit de soufflerie qui, avantageusement, est inclus dans le volume du réhausseur, en partie haute, à proximité de la façade (8).

Les fentes ou autres ouvertures assurent la projection de l'air sur la façade (8) qui reste en permanence dépourvue de buée.

On constitue ainsi une installation présentant un volume largement supérieur à ceux des aquariums connus jusqu'à présent, et assurant la combinaison d'un milieu aquatique et d'un milieu aérien permettant la réalisation d'un ensemble harmonieux et complet.

### REFERENCES

- 1.: Galerie
- 2.: Vitre
- 3.: Tube néon
- 4.: Ventilateur
- 5.: Tube perforé de distribution d'eau
- 6.: Support vitré
- 7.: Cellule à parois vitrées
- 8.: Façade vitrée
- 9.: Base
- 10.: Réhausseur
- 11.: Pompe
- 12.: Végétation
- 13.: Enrochements
- 14.: Milieu terrestre
- 15.: Circuit

## Revendications

1. Installation pour la reconstitution d'un milieu naturel comportant une base (9) sous forme d'un bac empli d'eau pour la reconstitution d'un milieu aquatique, **caractérisée par le fait**
**qu'**elle comporte un réhausseur (10), superposé à la base (9) et délimitant un volume intérieur de reconstitution d'un milieu aérien,
le réhausseur (10) comportant une plate-forme de support des éléments d'un milieu terrestre dans le milieu aérien, ladite plate-forme comportant une cellule (7) en matériau transparent de réception de moyens d'éclairage.

2. Installation selon la revendication 1, **caractérisée par le fait que** la plate-forme repose sur la bordure supérieure d'au moins une paroi verticale de la base (9).

3. Installation selon l'une quelconque des revendications 1 ou 2,
**caractérisée par le fait qu'**elle comporte des moyens de pompage de l'eau de la base (9) et un circuit (15) d'amenée de l'eau pompée à des moyens d'arrosage du milieu terrestre (14).

4. Installation selon la revendication 3, **caractérisée par le fait que** les moyens d'arrosage sont constitués par un tube (15) perforé de distribution de l'eau placé au-dessus du milieu terrestre (14) dans le milieu aérien.

5. Installation selon l'une quelconque des revendications 1 à 4,
**caractérisée par le fait qu'**elle comporte une galerie (1) fermant la partie supérieure du réhausseur (10).

6. Installation selon la revendication 5, **caractérisée par le fait que** la galerie (1) comporte des moyens de ventilation du milieu aérien.

7. Installation selon la revendication 6, **caractérisée par le fait qu'**elle présente un circuit de soufflerie en relation avec les moyens de ventilation pour l'application d'un flux d'air sur la paroi interne du réhausseur.
